# EUROPEAN PATENT APPLICATION

(11) **EP 4 276 341 A1**
(43) Date of publication of application: **15.11.2023**
(21) Application number: 23172799.1
(22) Date of filing: 11.05.2023
(51) Int. Cl.: F16L 33/213, F16L 33/22, F16L 37/091

(54) **COUPLING PIECE AND METHOD FOR CONNECTING A VENTILATION PIPE TO A VENTILATION APPLIANCE**

(30) Priority: 11.05.2022 BE 202205357
(71) Applicant: Vero Duco N.V., 8630 Veurne (BE)
(72) Inventor: LUST, Laurent, 8630 Veurne (BE); VANDAMME, Anthonie, 8630 Veurne (BE); RENSON, Luc Louis, 8630 Veurne (BE)
(74) Representative: Brantsandpatents bv

(57) **Abstract**

The present invention relates to a coupling piece for coupling a flexible ventilation duct having a first diameter to a rigid duct having a smaller second diameter, comprising an outer ring and an inner ring, wherein the outer ring and the inner ring are concentric, and wherein the outer ring and the inner ring are connected to each other by an intermediate surface, wherein the inner ring comprises flexible fingers, a flexible finger having a base and a tip, with the base of the flexible fingers facing the intermediate surface, wherein the inner ring at the tip of the flexible fingers has a smaller diameter than at the base of the fingers and where the flexible fingers, measured from the intermediate surface, have a length of at least 30 mm. The invention also relates to a method for coupling a flexible ventilation duct to a rigid duct and to a use of the coupling piece.

## Description

### TECHNICAL FIELD

In a first aspect, the invention relates to a coupling piece for coupling a flexible ventilation duct to a rigid duct with a smaller diameter.

In a second aspect, the invention also relates to a method for coupling a flexible ventilation duct to a rigid duct with a smaller diameter.

In another aspect, the invention also relates to a use of a coupling piece according to the first aspect and/or a method according to the second aspect for coupling a flexible ventilation duct to a ventilation device or to a T-shaped coupling piece of a ventilation system.

### PRIOR ART

For coupling a flexible ventilation duct to a rigid duct with a smaller diameter, a clamp band or clamp ring can be used. This clamp band or clamp ring is placed over the two ducts and screwed shut. However, this method is difficult for the person carrying out the work, can damage the ducts, and is hard to remove in case of errors. In addition, small openings are usually created by the compression of the ducts through which air can escape from the system. Therefore, after sealing, the system is pressurized to test for the presence of leaks. The seal is then usually further wrapped with tape or other material to seal it better. Although such a method is relatively effective, the method is time consuming.

DE 10 2014 115092 describes a coupling piece for coupling to a duct. The duct is a metal or plastic duct. The coupling piece is not suitable for flexible ventilation ducts.

There is clearly a need for a simple coupling piece and a simple method for coupling a flexible ventilation duct to a rigid duct with a smaller diameter. The present invention aims at solving at least some of the above-mentioned problems or disadvantages.

### SUMMARY OF THE INVENTION

In a first aspect, the present invention relates to a coupling piece according to claim 1. Because the inner ring comprises flexible fingers, the coupling piece is suitable for coupling the flexible ventilation duct and rigid duct with smaller diameter. A U-shaped pattern, formed by the concentric outer ring and inner ring and the intermediate surface, is optimal for clamping the flexible ventilation duct. The fingers are designed to grip the rigid duct. As a result, the coupling piece fits tightly between the two ducts. This prevents air from escaping between the ducts.

Preferred forms of the coupling piece are shown in claims 2-9.

In a second aspect, the present invention relates to a method according to claim 10. This method has the advantage, among other things, that placing the coupling piece is simple, takes little time and requires no tools. Once placed, no additional checking, further fixation or sealing is required.

Preferred forms of the method are described in dependent claims 11-14.

In a third aspect, the present invention relates to a use according to claim 15. This use results in a fast and improved coupling of the ducts, without the use of tools, so that no extra checking, further fixation or sealing is required.

### DESCRIPTION OF THE FIGURES

**Figure 1** shows a perspective view of a coupling piece according to an embodiment of the present invention.
**Figure 2A** shows a detail representation of a top view of a coupling piece according to an embodiment of the present invention.
**Figure 2B** shows a top view of a coupling piece according to an embodiment of the present invention.
**Figure 3** shows a cross-section of a coupling piece according to an embodiment of the present invention.
**Figure 4** shows a side view of a coupling piece according to an embodiment of the present invention.
**Figure 5** shows a bottom view of a coupling piece according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In this document, a flexible finger is understood to mean that the flexible finger is movable between a first and second position, the flexible finger having a base and a tip, wherein in the first position a first straight line passes through the base and the tip of the flexible finger and in the second position a second straight line passes through the base and tip of the flexible finger and the angle between the first straight line and the second straight line is at least 20°.

In a first aspect, the invention relates to a coupling piece for coupling a flexible ventilation duct having a first diameter to a rigid duct having a smaller second diameter.

In a preferred embodiment, the coupling piece comprises an outer ring and an inner ring, wherein the outer ring and the inner ring are concentric, and wherein the outer ring and the inner ring are connected to each other by an intermediate surface. Concentric means that the outer ring and inner ring have the same central axis. The inner ring comprises flexible fingers, where a flexible finger has a base and a tip. The base of the flexible fingers faces the intermediate surface. This means that the base of the flexible fingers is closer to the intermediate surface than the tip of the flexible fingers. The inner ring at the tip of the flexible fingers has a smaller diameter than at the base of the fingers. The flexible fingers, measured from the intermediate surface, have a length of at least 30 mm, preferably a length of at least 35 mm, more preferably a length of at least 40 mm and even more preferably a length of at least 45 mm.

The flexible ventilation duct with the first diameter and the rigid duct with the smaller second diameter form part of a ventilation system comprising a ventilation device. The rigid duct with the second diameter is part of the ventilation device. The flexible ventilation duct is suitable for sucking in fresh outside air to the ventilation device, for discharging polluted air from the ventilation device to the outside, for distributing fresh outside air from the ventilation device indoors or for extracting polluted air from indoors to the ventilation device. Another possible application is that the rigid duct with the second diameter is part of a T-fitting. Preferably, each end of the T-fitting is a rigid duct with a diameter equal to the second diameter, and a flexible ventilation duct is connected to each end of the T-fitting. This is advantageous for splitting, for example, a flexible ventilation duct that distributes fresh outside air indoors or for bringing together two flexible ventilation ducts that extract polluted air at two different indoor locations.

The flexible ventilation duct with the first diameter is placed on the rigid duct with the second diameter. The first diameter is larger than the second diameter. Preferably, the inner diameter of the flexible ventilation duct is at least 1 mm larger than the outer diameter of the rigid duct. Preferably, the inner diameter of the flexible ventilation duct is at most 15 mm larger than the outer diameter of the rigid duct, more preferably at most 10 mm, even more preferably at most 5 mm and even more preferably at most 3 mm.

Because the inner ring comprises flexible fingers, with the base of the flexible fingers facing the intermediate surface, the coupling piece is suitable for coupling the flexible ventilation duct and the rigid duct with smaller diameter. The fingers are designed to grip the rigid duct. Because the fingers are flexible, sliding the coupling piece over the rigid duct bends them outward and presses them against the flexible ventilation duct inside the flexible ventilation duct, so that the flexible ventilation duct and the rigid duct are coupled. The fingers are able to bend depending on a pressure developed by the two ducts coupled by the intermediate piece.

A U-shaped pattern, formed by the concentric outer ring and inner ring and the intermediate surface, is optimal for clamping the flexible ventilation duct. As a result, the coupling piece fits tightly between the two ducts. This prevents air from escaping between the ducts.

Because the flexible fingers, measured from the intermediate surface, have a length of at least 30 mm, they are long enough to press against the flexible ventilation duct over a sufficient distance, so that it encounters sufficient resistance and is firmly coupled.

According to an embodiment, the flexible fingers, measured from the intermediate surface, have a length of maximally 90 mm, more preferably maximally 85 mm, even more preferably maximally 80 mm and even more preferably maximally 75 mm.

According to an embodiment, the inner ring has a maximum diameter, wherein a ratio of the maximum diameter of the inner ring to the diameter of the inner ring at the tip of the flexible fingers is at least 1.10 and at most 1.30. This ratio is measured when no forces are exerted on the flexible fingers. The flexible fingers are therefore not bent or pushed and are therefore not in use for coupling the rigid duct and the flexible ventilation duct.

Because the inner ring has a maximum diameter, where a ratio of the maximum diameter of the inner ring to the diameter of the inner ring at the tip of the flexible fingers is at least 1.10 and at most 1.30, the flexible fingers of the coupling piece extend tapered inward before placement of the coupling piece. When the coupling piece is placed, the flexible fingers are pressed outwards, so that the flexible fingers exert pressure on the rigid duct and on the flexible ventilation duct, so that they are coupled more firmly. This ratio between 1.10 and 1.30 is ideal. If the ratio is too high, it is more difficult to slide the coupling piece over the rigid duct and connect the rigid duct and the flexible ventilation duct. If the ratio is lower, insufficient pressure is exerted by the flexible fingers on the rigid duct, causing the coupling piece to detach from the rigid duct too easily.

According to an embodiment, the flexible fingers comprise a thickening along the polygonal recess. Along the polygonal recess there is a thickening for strengthening the flexible fingers. The thickening preferably runs in the direction from the base of the flexible fingers to the tip of the flexible fingers, along the polygonal recess.

According to an embodiment, in a plane transverse to the intermediate surface, the coupling piece has a U-shape as a cross-section, the intermediate surface being a base of the U-shape, the outer ring and the inner ring being two legs of the U-shape, the legs having a length of at least 8 mm, preferably at least 10 mm. The legs of the U-shape are not necessarily perpendicular to the intermediate surface.

This embodiment is advantageous because it makes the coupling piece suitable for sliding and clamping a flexible ventilation duct between the inner ring and the outer ring. Because the inner ring and the outer ring are the legs of the U-shape and have a length of at least 8 mm, the coupling piece is suitable for preventing air leaks. Especially if the flexible ventilation duct that is clamped between the inner ring and outer ring is not cut straight, this could lead to air leaks.

According to an embodiment, the flexible fingers form an obtuse angle with the intermediate surface, the obtuse angle being at least 95° and at most 120°. The obtuse angle is measured on the side of the outer ring.

Preferably the obtuse angle is at least 100°, more preferably at least 105°.

Preferably, the obtuse angle is at most 115°, more preferably at most 110°.

Because the flexible fingers form an obtuse angle with the intermediate surface, where the obtuse angle is at least 95° and at most 120°, the coupling piece fits optimally for coupling a flexible ventilation duct with a first diameter to a rigid duct with a smaller second diameter. Because this angle is at least 95° and at most 120°, the coupling piece is clamped onto the rigid duct. Moreover, the flexible ventilation duct can thus be easily placed between the inner ring and the outer ring of the coupling piece.

In an embodiment, the flexible fingers curve toward an axis through the center of the inner ring and transverse to the intermediate surface.

Because the flexible fingers curve toward an axis through the center of the inner ring and transverse to the intermediate surface, these fingers are better suited to clamp against the rigid duct.

According to a further embodiment, the curvature of the flexible fingers towards the central axis depends on the distance to the inner ring and the length of the finger. Preferably, the flexible fingers are S-shaped. S-shaped flexible fingers are advantageous because the coupling piece can already be partially placed on the rigid duct in a first step with the application of a very limited force, after which it is only pushed further onto the rigid duct in a second step, where the flexible fingers are pressed towards the outer ring. This makes it easier to connect the rigid duct and the flexible ventilation duct.

According to an embodiment, the inner ring comprises 5 to 40 flexible fingers.

Preferably, the inner ring comprises at least 10 flexible fingers, more preferably at least 12 flexible fingers, even more preferably at least 14 flexible fingers and even more preferably at least 15 flexible fingers.

The inner ring preferably comprises at most 35 flexible fingers, more preferably at most 30 flexible fingers, even more preferably at most 25 flexible fingers and even more preferably at most 20 flexible fingers.

Because the inner ring comprises 5 to 40 flexible fingers, the coupling piece comprises the correct number of flexible fingers to exert optimum pressure on the rigid duct and the flexible ventilation duct.

According to an embodiment, a flexible finger has a width, measured at the base of the finger, equal to 5% to 20% of the diameter of the inner ring, preferably 7% to 15%. As a result, the flexible finger is sufficiently strong not to snap off when the coupling piece is placed on the rigid duct, and the flexible finger is sufficiently small so that a sufficiently large number of flexible fingers can be contained in the inner ring.

According to an embodiment, a distance between two adjacent flexible fingers, measured at the base of the flexible fingers, is equal to 2% to 20% of the diameter of the inner ring, preferably 3% to 10%. This distance between two adjacent flexible fingers is advantageous when placing the flexible ventilation duct between the outer ring and the inner ring to have a sufficient view of whether the flexible ventilation duct is sufficiently deeply and correctly placed, while still allowing a sufficient number of flexible fingers to be contained in the inner ring.

According to an embodiment, the outer ring comprises an upright wall, transverse to the intermediate surface, wherein the flexible fingers are located within the upright wall and wherein the upright wall comprises at least 2 recesses. Being inside the upright wall is to be understood in this document to mean that the flexible fingers extend in a direction perpendicular to the central axis of the outer ring, not beyond the upright wall. The upright wall has a height of at most 60 mm, measured from the intermediate surface, preferably at most 50 mm, more preferably at most 45 mm and even more preferably at most 40 mm.

Because the outer ring comprises an upright wall, transverse to the intermediate surface, a flexible ventilation duct can easily be placed between the inner ring and the outer ring. The upright wall guides and pushes the duct in the right direction. Because the upright wall comprises at least 2 recesses, it is possible to inspect the flexible ventilation duct and to exert force via these recesses. This is also useful when removing the flexible ventilation duct from the coupling piece. The upright wall preferably comprises at least 3 recesses and a maximum of 10 recesses. Most preferably, the upright wall comprises 4 recesses.

This embodiment can advantageously be combined with a previously described embodiment in which the coupling piece has a U-shape as cross-section transversely to the intermediate surface. The upright wall hereby forms a leg of the U-shape. The upright wall then has a height of at least 8 mm at the height of an opening.

According to an embodiment, the flexible fingers comprise a prismatic protrusion, wherein the prismatic protrusions are directed towards the outer ring. The prismatic protrusions preferably have a triangular cross-section.

Because the flexible fingers comprise a prismatic protrusion, wherein the prismatic protrusions are directed towards the outer ring, the fingers are suitable for clamping themselves behind a helical steel wire comprised in the flexible ventilation duct.

According to a further embodiment, the distance from the prismatic protrusions to the intermediate surface is at least 60% of the distance from the tip of the flexible fingers to the intermediate surface, preferably at least 70%. This is advantageous because the protrusions are located at a point of the flexible fingers that is sufficiently moved towards the outer ring by sliding the coupling piece onto the rigid duct, so that the protrusions hook behind the helical steel wire.

According to an embodiment, the distance from a highest point of the prismatic protrusion to the flexible finger, measured perpendicular to the flexible finger, is 0.5 mm to 5 mm, preferably 1 mm to 3 mm. This is advantageous because as a result the protrusion is sufficiently large to hook effectively behind the helical steel wire comprised in the flexible ventilation duct.

According to an embodiment, at the level of the intermediate surface, the outer ring is at a distance from the inner ring, said distance being at least 2 mm and at most 15 mm.

Because the outer ring is at a distance from the inner ring at the level of the intermediate surface, said distance being at least 2 mm and at most 15 mm, the coupling piece is suitable for clamping the ventilation duct between the inner ring and the outer ring. Preferably said distance is 2 mm to 6 mm, more preferably 2 mm to 4 mm.

According to an embodiment, the flexible fingers comprise a polygonal recess. The polygonal recess is preferably trapezoidal. The polygonal recess is preferably an isosceles trapezoid.

Because the flexible fingers comprise a polygonal recess, the flexibility of the fingers increases. The polygonal recess is also advantageous for limiting material use in manufacturing the coupling piece. This embodiment is also advantageous when placing the flexible ventilation duct between the outer ring and the inner ring to have a sufficient view of whether the flexible ventilation duct is sufficiently deeply and correctly placed.

According to an embodiment, the coupling piece is manufactured from polypropylene.

Because the coupling piece is made of polypropylene, the coupling piece is sufficiently flexible yet sufficiently rigid to clamp itself between the two ducts and to withstand this pressure for a long period of time. Polypropylene is suitable as a hard and flexible plastic and is also easy to recycle.

In a second aspect, the invention relates to a method for coupling a flexible ventilation duct with a first diameter to a rigid duct with a smaller second diameter.

According to a preferred embodiment, the method comprises the steps of: sliding a coupling piece, comprising an outer ring and an inner ring, the outer ring and the inner ring being concentric, and the outer ring and the inner ring being connected to each other by an intermediate surface, into the flexible ventilation duct; and sliding the coupling piece over the rigid duct; wherein the flexible ventilation duct is placed between the inner ring and the outer ring of the coupling piece, the inner ring comprising flexible fingers, a flexible finger having a base and a tip, with the base of the flexible fingers facing the intermediate surface, wherein the inner ring at the tip of the flexible fingers has a smaller diameter than at the base of the fingers and wherein the flexible fingers, measured from the intermediate surface, have a length of at least 30 mm, preferably a length of at least 35 mm, more preferably a length of at least 40 mm and even more preferably a length of at least 45 mm.

This method has the advantage, among other things, that placing the coupling piece is simple, takes little time and requires no tools. Once placed, no additional checking, further fixation or sealing is required. Because the coupling piece comprises an outer ring and an inner ring, the outer ring and the inner ring being concentric, and the outer ring and the inner ring being connected to each other by an intermediate surface, this coupling piece can be slid into the ventilation duct. The concentric outer ring and inner ring, connected by an intermediate surface, form a U-shaped seal that prevents air from escaping the system between the two ducts. Because the inner ring comprises flexible fingers, a flexible finger having a base and a tip, with the base of the flexible fingers facing the intermediate surface, wherein the inner ring at the tip of the flexible fingers has a smaller diameter than at the base of the fingers and where the flexible fingers, measured from the intermediate surface, have a length of at least 30 mm, these fingers are suitable for coupling a flexible ventilation duct to a rigid duct.

Because the coupling piece is slid over the rigid duct, the flexible fingers can clamp themselves on the outer surface of the rigid duct. This makes it very difficult for the coupling piece to come loose again from this rigid duct. Because the flexible fingers, measured from the intermediate surface, have a length of at least 30 mm, the fingers clamp the outer surface of the rigid duct sufficiently strongly.

According to an embodiment, the flexible ventilation duct has an inner diameter of 125 ± 1 mm. According to a further embodiment, the outer ring has an inner diameter between 127 and 140 mm. According to a further embodiment, the inner ring has an outer diameter between 110 mm and 124 mm.

According to an embodiment, the flexible fingers comprise a prismatic protrusion, wherein the prismatic protrusions are directed towards the outer ring and wherein the prismatic protrusions hook behind a helical wire comprised in the flexible ventilation duct when the coupling piece is slid onto the rigid duct.

Because the flexible fingers comprise a prismatic protrusion at one end, wherein the prismatic protrusions are directed towards the outer ring and the prismatic protrusions hooking behind a helical wire comprised in the flexible ventilation duct when the coupling piece is slid onto the rigid duct, it is prevented that after placing the coupling piece on the rigid duct, the flexible ventilation duct can be easily detached from the coupling piece. The coupling piece is securely attached to the rigid duct and will not shift or move and the flexible ventilation duct is securely attached in the coupling piece even under a pressure generated by the ventilation device. An air leak is therefore further avoided by these prismatic protrusions.

According to an embodiment, the outer ring comprises an upright wall, transverse to the intermediate surface, wherein the flexible fingers are located within the upright wall, wherein the upright wall comprises at least 2 recesses, preferably comprises 4 recesses, and wherein the flexible ventilation duct during sliding of the coupling piece into the flexible ventilation duct is held at the height of the recesses.

Because the outer ring comprises an upright wall, transverse to the intermediate surface, a flexible ventilation duct can easily be placed between the inner ring and the outer ring. The upright wall guides and pushes the duct in the right direction. Because the upright wall comprises at least 2 recesses, it is possible, via these recesses, to inspect the flexible ventilation duct, to exert force and to hold it while sliding the coupling piece into the flexible ventilation duct. This also reduces the risk of fractures. This is also useful when removing the flexible ventilation duct from the coupling piece.

According to an embodiment, the outer ring at the level of the intermediate surface is at a distance from the inner ring, said distance being at least 2 mm and at most 15 mm, and wherein the flexible ventilation duct is placed against the intermediate surface between the outer ring and the inner ring.

Because the outer ring at the level of the intermediate surface is at a distance from the inner ring, said distance being at least 2 mm and at most 15 mm, and with the flexible ventilation duct being placed against the intermediate surface between the outer ring and the inner ring, the coupling piece suitable for clamping the flexible ventilation duct between the inner ring and the outer ring. According to an embodiment, said distance is 1.0 to 1.1 times the thickness of the flexible ventilation duct, more preferably 1.01 to 1.05 times the thickness of the flexible ventilation duct.

According to an embodiment, in a plane transverse to the intermediate surface, the coupling piece has a U-shape as a cross-section, the intermediate surface being a base of the U-shape, the outer ring and the inner ring being two legs of the U-shape, the legs having a length of at least 8 mm and the flexible ventilation duct being placed against the intermediate surface in the U-shape.

Because the coupling piece has a U-shape as a cross-section in a plane transverse to the intermediate surface, the intermediate surface being a base of the U-shape, the outer ring and the inner ring being two legs of the U-shape, the flexible ventilation duct can be clamped between these two legs. In addition, sufficient pressure is put on the two ducts, so that no air can escape the ventilation system between these two ducts. Even if the flexible ventilation duct that is clamped between the inner ring and outer ring is not cut straight, air leaks can be avoided. Because the legs have a length of at least 8 mm, a small unevenness in the surface of the flexible ventilation duct can be covered by the legs. Moreover, if the placement is not optimal, in which the flexible ventilation duct is not pushed against the intermediate surface, the coupling piece will still couple the ducts in such a way that air leaks are avoided. Because the flexible ventilation duct is placed against the intermediate surface in the U-shape, no air can escape between the two ducts. By placing the flexible ventilation duct against the intermediate surface, this duct is pushed well between the two concentric rings of the coupling piece. The coupling piece cannot then come loose and no air will escape between the ducts and the coupling piece.

According to an embodiment, the inner ring has an inner diameter that is at most 1 mm larger than the second diameter of the rigid duct and an outer diameter that is at most 1 mm smaller than the first diameter of the flexible ventilation duct and wherein the outer ring has an inner diameter that is at most 1 mm larger than the first diameter of the flexible ventilation duct.

Because the inner ring has an inner diameter that is at most 1 mm larger than the second diameter of the rigid duct and an outer diameter that is at most 1 mm smaller than the first diameter of the flexible ventilation duct and wherein the outer ring has an inner diameter that is at most 1 mm larger than the first diameter of the flexible ventilation duct, the coupling piece fits tightly against the ducts.

In a third aspect, the invention relates to a use of a coupling piece according to the first aspect and/or a method according to the second aspect for coupling a flexible ventilation duct to a ventilation device or to a T-shaped coupling piece of a ventilation system.

Because a coupling piece according to the first aspect and/or a method according to the second aspect are used for coupling a flexible ventilation duct to a ventilation device or to a T-shaped coupling piece of a ventilation system, the coupling can be done simply and quickly, without the use of tools, so that no extra checking, further fixation or sealing is required.

One skilled in the art will appreciate that a coupling piece according to the first aspect is preferably used for carrying out a method according to the second aspect and that a method according to the second aspect preferably uses a coupling piece according to the first aspect. Each feature described in this document, both above and below, can therefore relate to any of the three aspects of the present invention.

The invention will now be described in more detail with reference to the following non-limiting examples or figures.

### DESCRIPTION OF THE FIGURES

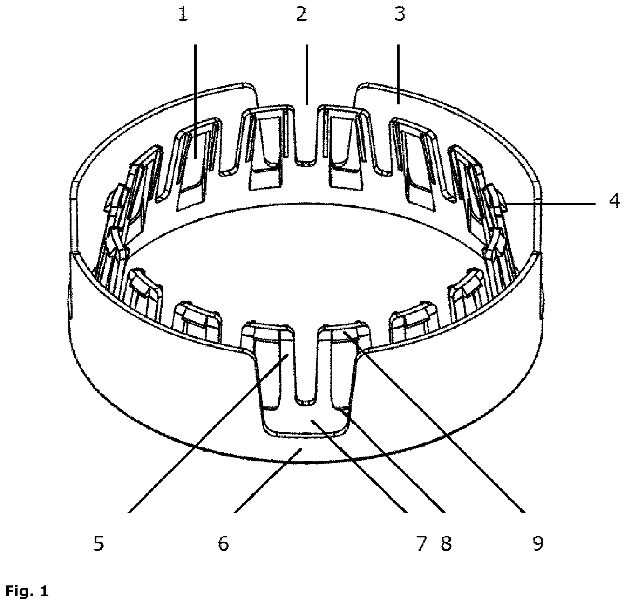

**Figure 1** shows a perspective view of a coupling piece according to an embodiment of the present invention.

The coupling piece comprises an outer ring (6) and an inner ring (7) which are connected to each other by an intermediate surface (12), not visible in this figure. The outer ring (6) and the inner ring (7) are concentric. The outer ring (6) comprises an upright wall (3) with 4 recesses (2). On the inner ring (7) there are flexible fingers (5), with the base (8) of the flexible fingers (5) facing the intermediate surface (12). The flexible fingers (5) have a length of 56 mm, measured from the intermediate surface (12) to the tip (9) of the flexible fingers (9). There are 16 flexible fingers (5) present. Near the tip (9) of each flexible finger (5) is a prismatic protrusion (4). The flexible fingers (5) comprise a polygonal recess (1). The upright wall (3) of the outer ring comprises 4 recesses (2).

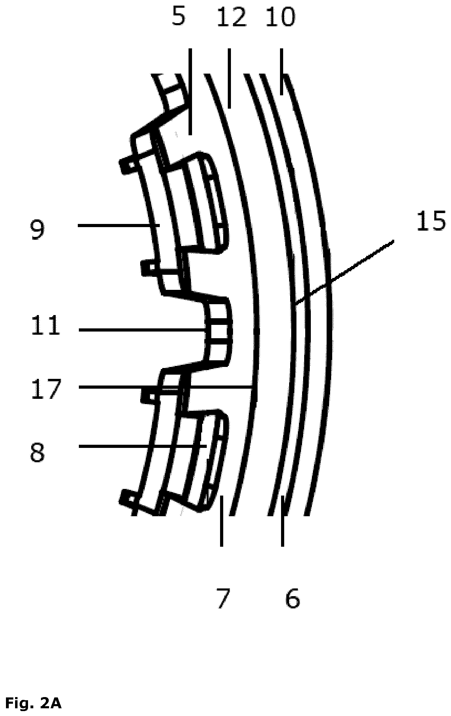

**Figure 2A** shows a detail representation of a top view of a coupling piece according to an embodiment of the present invention.

The coupling piece corresponds to the coupling piece in Figure 1.

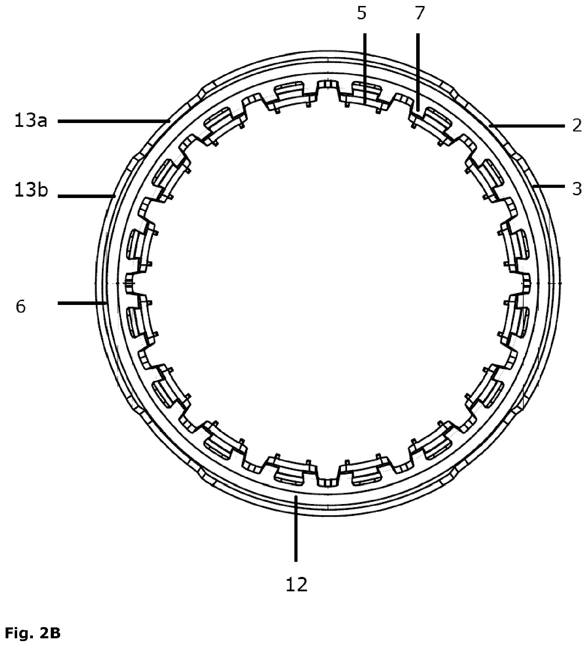

The viewing direction according to which Figure 2 is drawn allows the intermediate surface (12) to be displayed between the outer ring (6) and the inner ring (7).

The outer ring (6) has an upper edge (10). The upper edge (10) of the outer ring (6) has a thickness of 2 mm. The upper edge (10) of the outer ring (6) has an outer diameter of 143 mm ± 1 mm. The outer ring (6) has an inner diameter. The inner diameter of the outer ring (6) is measured where the outer ring (6) and the intermediate surface (12) meet (15). The inner diameter, according to this embodiment, is 137 mm ± 1 mm.

The inner ring (7) comprises flexible fingers (5). The outer diameter of the inner ring (7) is measured where the inner ring (7) and the intermediate surface (12) meet (17). According to this embodiment, the outer diameter of the inner ring (7) is 130 mm ± 1 mm. The inner diameter of the inner ring is measured at an inner edge (11) of the inner ring (7). The inner diameter of the inner ring (7) is measured at a position where the inner diameter is maximal. According to this embodiment, the inner diameter of the inner ring (7) is 121 mm ± 1 mm.

**Figure 2B** shows a top view of a coupling piece according to an embodiment of the present invention.

The coupling piece corresponds to the coupling piece in Figure 1.

The coupling piece comprises an intermediate surface (12), an outer ring (6) and an inner ring (7). The outer ring (6) comprises an upright wall (3) with 4 recesses (2). Unlike Figure 2A, in Figure 2B depressions (13a) of the outer ring (6) in places where there is a recess (2) are shown. The outer ring (6) is 2.5-3.5 cm lower at the level of a depression (13a) of a recess (2) compared to a position (13b) where the outer ring (6) has no recess. The inner ring (7) comprises flexible fingers (5).

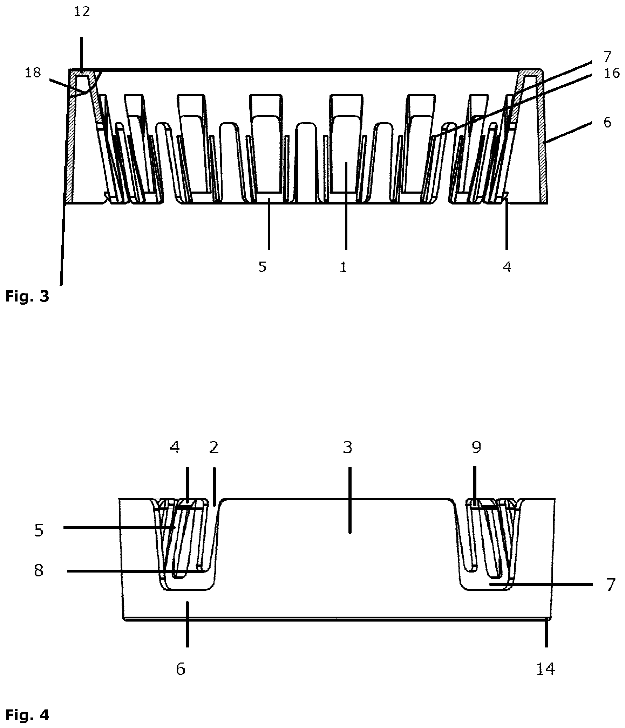

**Figure 3** shows a cross-section of a coupling piece according to an embodiment of the present invention.

The coupling piece corresponds to the coupling piece in Figure 1.

The outer ring (6) and the intermediate surface (12) are at an obtuse angle (18) of 95° to each other. The inner ring (7) forms an obtuse angle of 100° with the intermediate surface (12). The direction of the flexible fingers (5) is the same as the direction of the inner ring (7) where it is fixed to the intermediate surface (12). The flexible fingers (5) have a polygonal recess (1) and comprise a prismatic protrusion (4). The flexible fingers extend in a longitudinal direction. Along the polygonal recess (1) there is a thickening (16) in the longitudinal direction of the flexible fingers (5) for strengthening the flexible fingers.

**Figure 4** shows a side view of a coupling piece according to an embodiment of the present invention.

The coupling piece corresponds to the coupling piece in Figure 1.

The coupling piece comprises an outer ring (6) and an inner ring (7). The outer ring (6) comprises an upright wall (3) with 4 recesses (2). Only two recesses (2) are visible in Figure 4. Because the flexible fingers (5) reach the same height as the upright wall (3) in other places, it is only possible to see the flexible fingers (5) at the height of the recesses (2). At the tip (9) of the flexible fingers (5) is a prismatic protrusion (4).

Figure 4 shows an embodiment in which the intermediate surface (12), not visible in this figure, has an edge (14) extending in an opposite direction than the flexible fingers (5). This edge (14) is suitable to prevent the intermediate surface (12), not visible in this figure, from being pressed against a ventilation device and being difficult to remove. The edge (14) is concentric with the outer ring (6) and has a height of 4 mm, measured perpendicular to the intermediate surface (12), not visible in this figure.

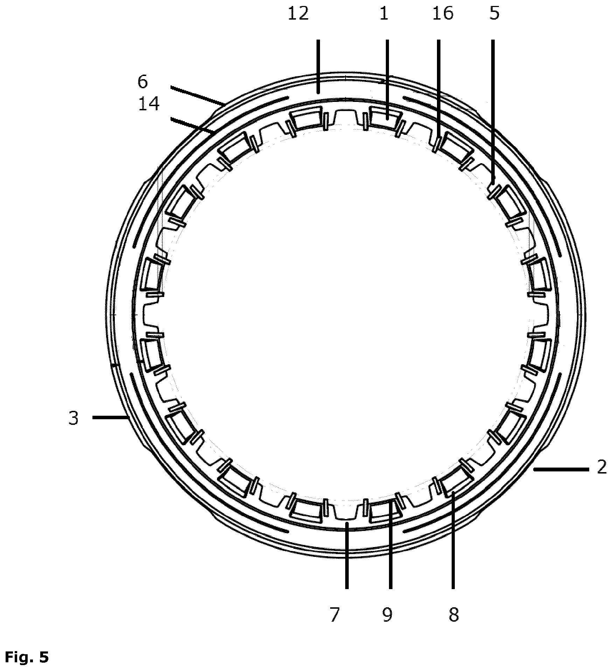

**Figure 5** shows a bottom view of a coupling piece according to an embodiment of the present invention.

The coupling piece corresponds to the coupling piece in Figure 1.

The coupling piece comprises an outer ring (6) and an inner ring (7) which are connected to each other by an intermediate surface (12).

The inner ring (7) comprises 16 flexible fingers (5), where a flexible finger (5) has a base (8) and a tip (9). The base (8) of the flexible fingers (5) is directed towards the intermediate surface (12). The inner ring (7) at the tip (9) of the flexible fingers (5) has a diameter of 112 ± 1 mm. The flexible fingers (5) face inward. The diameter measured at the tip (9) of the flexible fingers (5) is therefore where the diameter of the coupling piece is smallest. Measured from the intermediate surface (12), the flexible fingers (5) have a length of 50 mm. Measured from the base (8) to the tip (9) of the flexible fingers (5), the flexible fingers (5) have a length of 40 mm. The flexible fingers (5) have a polygonal recess (1). This polygonal recess (1) is a quadrangular opening in the center of the flexible finger (5). The flexible finger (5) has a thickening (16) for strengthening the flexible fingers (5). This thickening (16) runs along the polygonal recess (1) in the longitudinal direction.

On the intermediate surface (12) there is an edge (14), as also shown in Figure 4. The edge (14) does not run along a full circumference of the intermediate surface (12). To prevent the coupling piece from being pressed against a ventilation device, an interrupted ring is sufficient.

The upright wall (3) comprises 4 recesses (2).

## Claims

1. Coupling piece for coupling a flexible ventilation duct having a first diameter to a rigid duct having a smaller second diameter, comprising an outer ring and an inner ring, wherein the outer ring and the inner ring are concentric, and wherein the outer ring and the inner ring are connected to each other by an intermediate surface, **characterized in that** the inner ring comprises flexible fingers, a flexible finger having a base and a tip, with the base of the flexible fingers facing the intermediate surface, wherein the inner ring at the tip of the flexible fingers has a smaller diameter than at the base of the fingers and where the flexible fingers, measured from the intermediate surface, have a length of at least 30 mm.

2. The coupling piece according to claim 1, **characterized in that** the inner ring has a maximum diameter, wherein a ratio of the maximum diameter of the inner ring to the diameter of the inner ring at the tip of the flexible fingers is at least 1.10 and at most 1.30.

3. The coupling piece according to claim 1 or 2, **characterized in that** the flexible fingers form an obtuse angle with the intermediate surface, the obtuse angle being at least 95° and at most 120°.

4. The coupling piece according to any of the preceding claims 1-3, **characterized in that** the inner ring comprises 5 to 40 flexible fingers.

5. The coupling piece according to any of the preceding claims 1-4, **characterized in that** the outer ring comprises an upright wall, transverse to the intermediate surface, wherein the flexible fingers are located within the upright wall and wherein the upright wall comprises at least 2 recesses.

6. The coupling piece according to any of the preceding claims 1-5, **characterized in that** the flexible fingers comprise a prismatic protrusion, the prismatic protrusions being directed towards the outer ring.

7. The coupling piece according to any of the preceding claims 1-6, **characterized in that** at the level of the intermediate surface the outer ring is at a distance from the inner ring, said distance being at least 2 mm and at most 15 mm.

8. The coupling piece according to any of the preceding claims 1-7, **characterized in that** the flexible fingers comprise a polygonal recess.

9. The coupling piece according to any of the preceding claims 1-8, **characterized in that** the coupling piece is manufactured from polypropylene.

10. A method of coupling a flexible ventilation duct having a first diameter to a rigid duct having a smaller second diameter, comprising: sliding a coupling piece, comprising an outer ring and an inner ring, the outer ring and the inner ring being concentric, and the outer ring and the inner ring being connected to each other by an intermediate surface, into the flexible ventilation duct; and sliding the coupling piece over the rigid duct; **characterized in that** the flexible ventilation duct is placed between the inner ring and the outer ring of the coupling piece, wherein the inner ring comprises flexible fingers, a flexible finger having a base and a tip, with the base of the flexible fingers facing the intermediate surface, wherein the inner ring at the tip of the flexible fingers has a smaller diameter than at the base of the fingers and where the flexible fingers, measured from the intermediate surface, have a length of at least 30 mm.

11. The method according to claim 10, **characterized in that** the flexible fingers comprise a prismatic protrusion, wherein the prismatic protrusions are directed towards the outer ring and wherein the prismatic protrusions hook behind a helical wire comprised in the flexible ventilation duct when the coupling piece is slid onto the rigid duct.

12. The method according to claim 10 or 11, **characterized in that** the outer ring comprises an upright wall, transverse to the intermediate surface, wherein the flexible fingers are located within the upright wall, wherein the upright wall comprises at least 2 recesses, and wherein the flexible ventilation duct during sliding of the coupling piece into the flexible ventilation duct is held at the height of the recesses.

13. The method according to claim 12, **characterized in that** the outer ring at the level of the intermediate surface is at a distance from the inner ring, said distance being at least 2 mm and at most 15 mm, and wherein the flexible ventilation duct is placed against the intermediate surface between the outer ring and the inner ring.

14. The method according to any of claims 10-13, **characterized in that** the inner ring has an inner diameter that is at most 1 mm larger than the second diameter of the rigid duct and an outer diameter that is at most 1 mm smaller than the first diameter of the flexible ventilation duct and wherein the outer ring has an inner diameter that is at most 1 mm larger than the first diameter of the flexible ventilation duct.

15. Use of a coupling piece according to any of claims 1-9 and/or a method according to any of claims 10-14 for coupling a flexible ventilation duct to a ventilation device or to a T-shaped coupling piece of a ventilation system.
